# EUROPÄISCHE PATENTSCHRIFT

(11) **EP 0 866 761 B1**
(45) Veröffentlichungstag und Bekanntmachung des Hinweises auf die Patenterteilung: **17.11.1999**
(21) Anmeldenummer: 96942355.7
(22) Anmeldetag: 05.12.1996
(51) Int. Cl.: B62D 5/087

(54) **HILFSKRAFTLENKUNG, INSBESONDERE FÜR KRAFTFAHRZEUGE**
POWER STEERING GEAR INTENDED IN PARTICULAR FOR MOTOR VEHICLES
DIRECTION ASSISTEE, NOTAMMENT POUR VEHICULES AUTOMOBILES

(30) Priorität: 12.12.1995 DE 19546291
(43) Veröffentlichungstag der Anmeldung: 30.09.1998
(73) Patentinhaber: ZF FRIEDRICHSHAFEN Aktiengesellschaft, 88038 Friedrichshafen (DE)
(72) Erfinder: LANG, Armin, D-73529 Schwäbisch Gmünd (DE); ABELE, Wolfgang, D-73553 Alfdorf (DE); FRÖHLICH, Stefan, D-73557 Mutlangen (DE); KNÖDLER, Helmut, D-73547 Lorch (DE)
(86) Internationale Anmeldenummer: EP9605434
(87) Internationale Veröffentlichungsnummer: WO9721580

(56) Entgegenhaltungen:
- DE-A- 4 303 854

## Beschreibung

Die Erfindung betrifft eine Hilfskraftlenkung, insbesondere für Kraftfahrzeuge, nach dem Oberbegriff des Anspruches 1. Die Hilfskraftlenkung enthält ein Lenkventil mit zwei Einlaß-Sitzventilen und zwei Auslaß-Sitzventilen mit je einem Schließkörper. Die Schließkörper der AuslaßSitzventile sind über eine Betätigungseinrichtung in Abhängigkeit von der Drehbewegung einer mit einem Eingangsglied der Lenkung verbundenen Lenkspindel betätigbar. Die Schließkörper der Einlaß-Sitzventile sind in bezug auf einen Druck einer Druckquelle hydraulisch druckausgeglichen und halten durch die Kraft von Zuhaltefedern die Einlaß-Sitzventile in der Neutralstellung des Lenkventils geschlossen. Jede Zuhaltefeder stützt sich einerseits an einem Schließkörper eines der Einlaß-Sitzventile und andererseits an der Betätigungseinrichtung ab. Die Auslaß-Sitzventile sind in der Neutralstellung des Lenkventils geöffnet. Der wirksame Querschnitt der Schließkörper der Auslaß-Sitzventile ist kleiner als der wirksame Querschnitt der Schließkörper der Einlaß-Sitzventile.

Eine derartige Hilfskraftlenkung ist aus der DE 43 03 854 A1 bekannt. In einem Ausführungsbeispiel dieser bekannten Hilfskraftlenkung ist eine Zahnstangen-Hilfskraftlenkung dargestellt. Die Betätigung des Lenkventils erfolgt durch eine Schwenkbewegung des Ritzels. Die Einlaß-Sitzventile und die Auslaß-Sitzventile sind derart angeordnet, daß ihre Achsen im wesentlichen senkrecht zu der Achse des Ritzels stehen. Die Ventile sind dabei im unteren Bereich des Ritzels unterhalb der Zahnstange angeordnet. In diesem Bereich der Hilfskraftlenkung steht in Kraftfahrzeugen häufig nur ein sehr begrenzter Raum zur Verfügung.

Der Erfindung liegt die Aufgabe zugrunde, eine Hilfskraftlenkung zu schaffen, bei der das Lenkventil sehr kompakt ist und dadurch raumsparend untergebracht werden kann.

Diese Aufgabe wird durch die im Anspruch 1 gekennzeichnete Hilfskraftlenkung gelöst. Die Lösung erfolgt dadurch, daß bei einer gattungsgemäßen Hilfskraftlenkung das Lenkventil zwischen dem Eingangsglied und einem Ausgangsglied der Lenkung angeordnet ist und daß die Betätigungseinrichtung wenigstens einen Betätigungshebel zur Betätigung der Auslaß-Sitzventile aufweist. Durch diese Ausbildung kann das Lenkventil im oberen Teil der Hilfskraftlenkung untergebracht werden. Dies wird dadurch ermöglicht, daß durch die Betätigung über den Betätigungshebel die Steuerwege der Sitzventile größer sein können als bei einer Betätigung durch ein schwenkendes Ritzel. Durch den größeren Hub der Ventile lassen sich die erforderlichen Strömungsquerschnitte bei kleineren Ventildurchmessern erreichen.

Zweckmäßige und vorteilhafte Ausgestaltungen der Erfindung sind in den Unteransprüchen angegeben.

Der Betätigungshebel ist zweckmäßigerweise mit dem Eingangsglied der Lenkung fest verbunden. Je nach konstruktiven Gegebenheiten ist es möglich, für jedes der AuslaßSitzventile einen gesonderten Betätigungshebel oder aber für beide Auslaß-Sitzventile einen gemeinsamen, insbesondere einen zweiarmigen Betätigungshebel vorzusehen.

Der Schließkörper des Auslaß-Sitzventils wirkt direkt oder indirekt mit dem Betätigungshebel zusammen, an dem die Zuhaltefeder angreift. Ein Betätigungstift kann durch eine Betätigungsfeder in Wirkverbindung mit dem Betätigungshebel gehalten werden. Dabei kann der Schließkörper des Auslaß-Sitzventils entweder getrennt von dem Betätigungsstift oder einteilig mit diesem ausgebildet sein.

Um eine allmähliche Krafteinleitung bei einer Drehung des Eingangsgliedes zu ermöglichen, kann zwischen dem Eingangsglied und der Betätigungseinrichtung eine Vorfeder angeordnet sein. Die Vorfeder kann dabei zwischen dem Eingangsglied und dem Betätigungshebel angeordnet sein. Eine andere, konstruktiv einfache Möglichkeit der Anordnung der Vorfeder ergibt sich dann, wenn das Eingangsglied mit dem Betätigungshebel fest verbunden ist. Dann wird je eine Vorfeder zwischen dem Betätigungshebel und jedem Schließkörper der Auslaß-Sitzventile angeordnet. Eine besonders vorteilhafte Konstruktion ergibt sich dann, wenn die Vorfeder direkt als Schließkörper des Auslaß-Sitzventils ausgebildet ist. Dabei kann die Vorfeder eine ebene Ringfeder sein, durch deren zentrale Öffnung der Betätigungsstift hindurchgeführt ist. Der Federweg der Vorfeder wird zweckmäßigerweise von einer Anschlagscheibe begrenzt. Wird diese Anschlagscheibe pendelnd an dem Betätigungsstift gelagert, so ist die Anschlagscheibe frei von Kippmomenten und kann sich auf die genaue Stellung der Vorfeder leicht einstellen.

Zur Veränderung der Ventilkennlinie des Lenkventils kann jedem Einlaß-Sitzventil ein Begrenzungskolben zugeordnet sein, der durch eine Feder beaufschlagt ist. Um diese Feder besonders einfach dimensionieren zu können, wird sie zwischen zwei Anschlägen an dem Begrenzungskolben mit Vorspannung gehalten. Der eine Anschlag kann dabei als Bund des Begrenzungskolbens, der andere durch einen an dem Begrenzungskolben befestigten Sprengring gebildet sein.

Ordnet man zwischen dem Eingangsglied und dem Ausgangsglied der Lenkung einen Drehstab an, so kann ein Teil des am Eingangsglied eingeleiteten Drehmomentes ohne Erzeugung von Querkräften direkt auf das Ausgangsglied übertragen werden. Dadurch wird vermieden, daß das ganze Drehmoment über die Ventile geleitet werden muß. Außerdem ergibt sich eine Erhöhung des Betätigungsmoments im Wirkungsbereich der Vorfeder.

Im folgenden wird die Erfindung anhand mehrerer in der Zeichnung dargestellter Ausführungsbeispiele näher erläutert.
Es zeigen:
- Fig. 1: einen Längsschnitt durch die erfindungsgemäße Hilfskraftlenkung am Beispiel einer Zahnstangen-Hilfskraftlenkung;
- Fig. 2: einen Querschnitt durch die Hilfskraftlenkung nach der Linie II-II in Fig. 1;
- Fig. 3: einen Querschnitt durch die Hilfskraftlenkung nach der Linie III-III in Fig. 1;
- Fig. 4: einen Querschnitt durch ein weiteres Ausführungsbeispiel der Hilfskraftlenkung der Fig. 1;
- Fig. 5: einen Ausschnitt aus dem oberen Teil der Fig. 4 in einem weiteren Ausführungsbeispiel;
- Fig. 6 bis Fig. 10: einen Ausschnitt in vergrößertem Maßstab aus dem unteren Teil der Fig. 3 in weiteren Aus führungsbeispielen;
- Fig. 11: einen Längsschnitt durch ein weiteres Ausführungsbeispiel der Hilfskraftlenkung nach der Linie XI-XI in Fig. 1 in vergrößertem Maßstab und
- Fig. 12 und 13: den Verlauf der Ventilkennlinie zweier Ausführungsbeispiele der Hilfskaftlenkung. Dabei ist der Druck p im Servomotor über dem Drehmoment M am Eingangsglied der Lenkung aufgetragen.

Wegen der einfachen Darstellung wird die Erfindung anhand einer Zahnstangen-Hilfskraftlenkung beschrieben. Die Erfindung ist jedoch auch für andere Hilfskraftlenkungen, beispielsweise Kugelmutter-Hilfskraftlenkungen, anwendbar.

In einem Lenkgehäuse 1 ist ein Ritzel 2 in zwei Lagern 3 und 4 drehbar gelagert. Dabei ist das eine Lager 3 an einem Ventilkörper 5 angeordnet, der mit dem Ritzel 2 einteilig ausgeführt oder fest mit ihm verbunden ist. Das Ritzel 2 steht über seine Verzahnung in Eingriff mit einer Zahnstange 6, die in dem Lenkgehäuse 1 axial verschiebbar geführt ist. Die Zahnstange 6 wird mit Hilfe eines federbelasteten Druckstückes 7 in bekannter Weise gegen die Verzahnung des Ritzels 2 gedrückt.

Das Ritzel 2 bildet zusammen mit dem Ventilkörper 5 ein Ausgangsglied 8 der Hilfskraftlenkung. Ein Eingangsglied 10 der Hilfskraftlekung trägt an seinem einen Ende einen Lenkspindelanschluß 11 für den Anschluß an ein Lenkorgan, beispielsweise eine nicht dargestellte Lenkspindel mit einem Lenkhandrad.

Zwischen dem Eingangsglied 10 und dem Ausgangsglied 8 ist ein Drehstab 12 angeordnet, der beispielsweise durch einen Stift 13 mit dem Eingangsglied 10 und durch einen Stift 14 mit dem Ausgangsglied 8 bzw. dem Ritzel 2 fest verbunden ist.

Zwischen dem Eingangsglied 10 und dem Ausgangsglied 8 befindet sich ein Lenkventil 15. Dem Lenkventil 15 wird Druckmittel, das von einer nicht dargestellten Servopumpe gefördert und zweckmäßigerweise in einem Speicher gespeichert ist, durch einen Zulaufanschluß 16 über einen zentralen Kanal 17 und Zweigkanäle 18 bzw. 20 zugeführt.

Das Lenkventil 15 ist in zwei Teilen 21 und 22 ausgeführt. Jeder Teil 21 und 22 des Lenkventils 15 enthält ein Einlaß-Sitzventil 23 bzw. 24 und ein Auslaß-Sitzventil 25 bzw. 26. Dabei sind jeweils ein Einlaß-Sitzventil 23 bzw. 24 und ein Auslaß-Sitzventil 25 bzw. 26 koaxial zueinander angeordnet. Beide Teile 21 und 22 des Lenkventils 15 stehen in Wirkverbindung mit einem Betätigungshebel 27, der in dem Ausführungsbeispiel fest mit dem Eingangsglied 10 verbunden ist und zur gemeinsamen Betätigung beider Teile 21 und 22 des Lenkventils 15 dient. Dazu weist der Betätigungshebel 27 zwei Arme 28 und 30 auf, von denen je einer zur Betätigung eines der beiden Teile 21 bzw. 22 des Lenkventils 15 dient. Anstelle eines für beide Teile 21 und 22 des Lenkventils 15 gemeinsamen Betätigungshebels 27 kann auch jeder Teil 21 bzw. 22 von einem gesonderten Betätigungshebel betätigt werden.

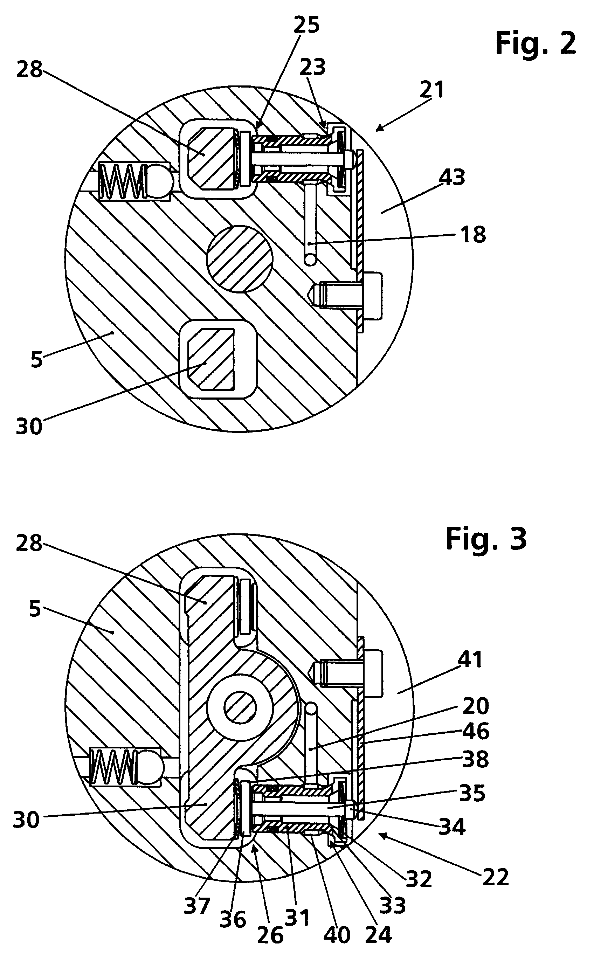

Die beiden Teile 21 und 22 des Lenkventils 15 sind im wesentlichen gleich ausgebildet. Der genauere Aufbau des Lenkventils 15 wird deshalb im folgenden nur anhand des einen, in Fig. 3 dargestellten Teiles 22 beschrieben.

In der Neutralstellung des Lenkventils 15 ist das Einlaß-Sitzventil 24 geschlossen. Dies wird dadurch erreicht, daß dessen Schließkörper 31 durch die Kraft einer Zuhaltefeder 32 in der Form einer Tellerfeder in Schließrichtung gegen einen Ventilsitz 33 gedrückt wird, der an dem Ventilkörper 15 ausgebildet ist. Die Zuhaltefeder 32 stützt sich einerseits an dem Schließkörper 31 und andererseits an einem Kopf 34 eines Betätigungsstiftes 35 ab. Der Betätigungsstift 35 geht durch eine Bohrung des Schließkörpers 31 hindurch und steht über einen Schließkörper 36 des Auslaß-Sitzventiles 26 und über eine Vorfeder 37 in Wirkverbindung mit dem Arm 30 des Betätigungshebels 27. Der Schließkörper 36 des Auslaß-Sitzventiles 26 wirkt mit einem an dem Schließkörper 31 des Einlaß-Sitzventiles 24 angeordneten Ventilsitz 38 zusammen.

Der Zweigkanal 20, der mit dem Zulaufanschluß 16 in Verbindung steht, ist an eine Zulaufkammer 40 angeschlossen, die an dem Einlaß-Sitzventil 24 angeordnet ist. Eine Kammer 41, die in der Neutralstellung des Lenkventils 15 von der Zulaufkammer 40 getrennt ist, steht mit einem Zylinderanschluß 42 in Verbindung. In gleicher Weise steht eine Kammer 43 bei dem Einlaß-Sitzventil 23 in Verbindung mit einem zweiten Zylinderanschluß 44. Außerdem sind die beiden Kammern 41 und 43 über die jeweiligen Bohrungen der Schließkörper der Einlaß-Sitzventile 23 und 24 mit einem Rücklaufanschluß 45 verbunden. Die beiden Kammern 41 und 43 sind zwischen dem Lenkgehäuse 1 und dem Ventilkörper 5 ausgebildet. Die Zylinderanschlüsse 42 und 44 stehen mit zwei Arbeitsräumen eines nicht dargestellten Servomotors in Verbindung.

Der Betätigungsstift 35 wird über eine Betätigungsfeder 46, die als ebene Biegefeder ausgebildet ist, in Wirkverbindung mit dem Schließkörper 36 des Auslaß-Sitzventiles 26 und damit indirekt mit dem Betätigungshebel 27 gehalten. Der Betätigungsstift 35 ist in seiner Länge so dimensioniert, daß die Zuhaltefeder 32 dann kräftefrei ist, wenn der Schließkörper 36 des Auslaß-Sitzventiles 26 an dem Ventilsitz 38 gerade anliegt, d. h., wenn das Auslaß-Sitzventil 26 schließt. Ist das Auslaß-Sitzventil 26 geöffnet, so wird die Zuhaltefeder 32 von der Betätigungsfeder 46 gegen den Schließkörper 31 des Einlaß-Sitzventiles 24 gedrückt, so daß das Einlaß-Sitzventil 24 sicher geschlossen ist.

Die Betätigungsfeder 46 kann anstelle einer Ausbildung als ebene Biegefeder auch andere Formen aufweisen. So bringt beispielsweise eine gebogene Bügelfeder, die von einer Anlage an dem Kopf 34 des Betätigungsstiftes 35 ausgehend den Ventilkörper 5 bogenförmig umspannt, den Vorteil einer vergrößerten Andrückkraft des Schließkörpers 31 des Einlaß-Sitzventiles 24 an den Ventilsitz 33 bei geringerer Federsteife.

Der wirksame Querschnitt des Schließkörpers 36 des Auslaß-Sitzventiles 26 ist kleiner als der wirksame Querschnitt des Schließkörpers 31 des Einlaß-Sitzventiles 24.

Im folgenden wird die Funktion dieses Ausführungsbeispieles der erfindungsgemäßen Hilfskraftlenkung beschrieben: In der gezeichneten Neutralstellung sind die beiden Zylinderanschlüsse 42 und 44 durch die Bohrungen in den Schließkörpern der Einlaß-Sitzventile 23 und 24 und über die offenen Auslaß-Sitzventile 25 und 26 mit dem Rücklaufanschluß 45 verbunden. Dabei ist der offene Neutralspalt der Auslaß-Sitzventile 25 und 26 gleich dem Vorspannweg der Zuhaltefedern 32. Um diesen zu überwinden, ist ein entsprechender Vorspannweg der Betätigungsfeder 46 erforderlich.

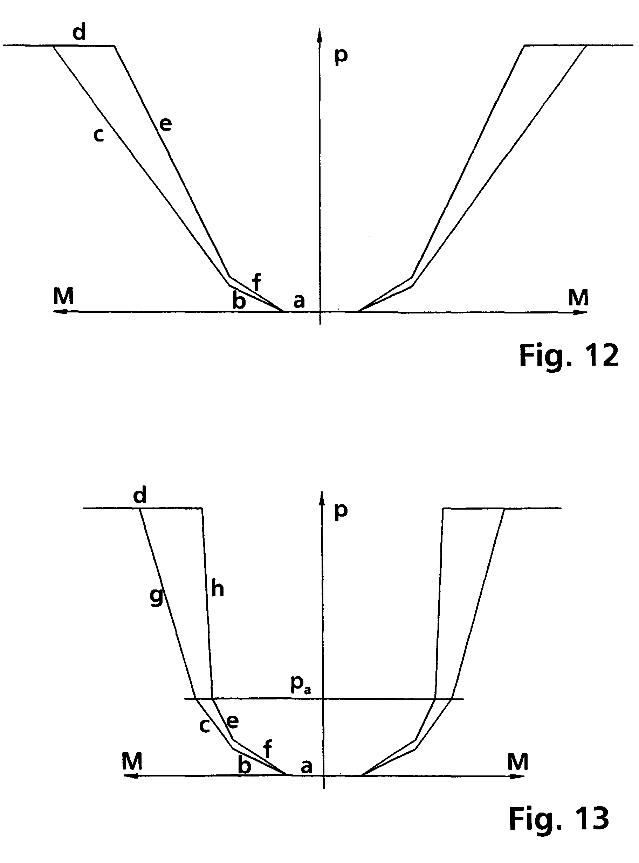

Wird durch eine Drehung des nicht dargestellten Lenkhandrades an dem Eingangsglied 10 ein Drehmoment, beispielsweise im Sinne einer Linksdrehung, eingeleitet, so dreht sich das Eingangsglied 10 zunächst und der Betätigungshebel 27 schwenkt mit seinen Armen 28 und 30, bis auf der linken Seite der Neutralspalt des Auslaß-Sitzventiles 26 verschwindet und der Arm 30 den Schließkörper 36 des Auslaß-Sitzventiles 26 über die Vorfeder 37 zur Anlage an dem Ventilsitz 38 bringt. In diesem Anlenkbereich, der in Fig. 12 mit "a" bezeichnet ist, sind beide Zylinderanschlüsse 42 und 44 noch drucklos.

Die hydraulische Unterstützung des Lenkventils 15 setzt ein, wenn der Schließkörper 36 des Auslaß-Sitzventils 26 an dem Ventilsitz 38 anliegt und auf diesen drückt. Wie oben beschrieben, ist dann die Zuhaltefeder 32 kräftefrei. Auf den Ventilkörper 31 des Einlaß-Sitzventiles 24 wirkt nur noch die von dem Schließkörper 36 aufgebrachte Kraft und schiebt den Schließkörper 31 nach rechts. Dadurch öffnet das Einlaß-Sitzventil 24. Druckmittel strömt von dem Zweigkanal 20 zu dem Zylinderanschluß 42 und baut auf der rechten Seite des Schließkörpers 31 einen Druck auf, entsprechend seinem Querschnitt und der auf ihn von dem Schließkörper 36 ausgeübten Kraft, die von dem Drehmoment am Eingangsglied 10 erzeugt wird. Da infolge dieser Kraft die Vorfeder 37 zusammengedrückt wird, muß dabei gleichzeitig der Drehstab 12 verdreht werden. Somit erhöht sich das an dem Eingangsglied 10 aufzubringende Drehmoment entsprechend der Verdrehsteife des Drehstabes 12 und der Elastizität der Vorfeder 37. Der zweite Kennlinienast "b" endet, wenn der Federweg der Vorfeder 37 aufgebraucht ist.

Ist die Vorfeder 37 danach außer Funktion, so findet keine wesentliche Verdrehung des Drehstabes 12 mehr statt. Die Drehmomentzunahme an dem Eingangsglied 10 wird im wesentlichen nur noch durch die hydraulische Last an dem Schließkörper 31 und an dem wirksamen Arm 30 des Betätigungshebels 27 bestimmt.

Erreicht der Druck in dem Zylinderanschluß 42 den Druck an dem Zulaufanschluß 16, so ist keine weitere Drucksteigerung mehr möglich und das Eingangsglied 10 verdreht sich bei weiterer Drehmomenterhöhung, bis der Betätigungshebel 27 mit seinem Arm 28 an den Ventilkörper 5 anschlägt. Dabei wird das Einlaß-Sitzventil 24 weit geöffnet. Dies ermöglicht ein Freispülen von Fremdkörpern. In Fig. 12 ist dieser Zustand der Druckbegrenzung mit "d" bezeichnet.

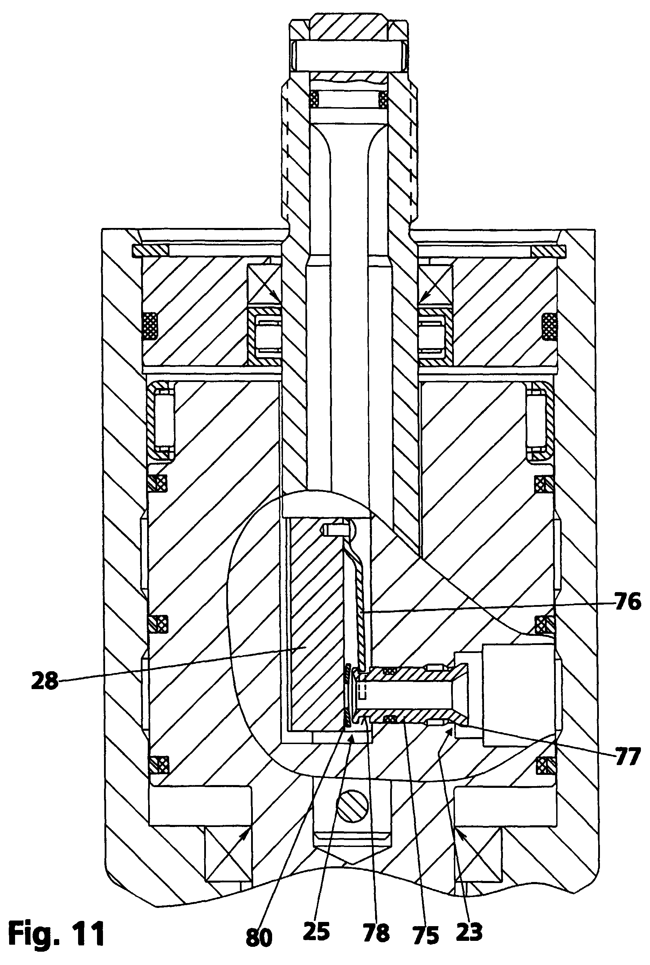

Von dem Zylinderanschluß 43 kann das Druckmittel erst dann wieder zu dem Rücklaufanschluß 45 entweichen, wenn der Schließkörper 36 des Auslaß-Sitzventiles 26 von dem Ventilsitz 38 am Schließkörper 31 des Einlaß-Sitzventiles 24 abhebt. Um zu verhindern, daß dies bereits am aufsteigenden Ast "c" der Kennlinie in Fig. 11 eintritt, ist der wirksame Querschnitt des Schließkörpers 36 des Auslaß-Sitzventiles 26 kleiner als der wirksame Querschnitt des Schließkörpers 31 des Einlaß-Sitzventiles 24. Ohne diese konstruktiven Gegebenheiten könnte das Druckmittel direkt vom Zulaufanschluß 16 zum Rücklaufanschluß 45 entweichen und der an den Zulaufanschluß 16 angeschlossene, nicht dargestellte Druckspeicher würde entleert. Deshalb verläuft der fünfte Kennlinienast "e" steiler als der dritte Kennlinienast "c". Der Kennlinienast "e" endet, wenn das Drehmoment an dem Eingangsglied 10 so weit erniedrigt wurde, daß die Vorfeder 37 beginnt, sich zu entspannen.

Wenn sich die Vorfeder 37 bei weiter nachlassendem Drehmoment entspannt, so dreht sich das Eingangsglied 10 rückwärts und das Drehstabmoment nimmt ab. Der Kennlinienast "f" verläuft deshalb flacher als der Kennlinienast "e". Ist die Vorfeder 37 so weit entspannt, daß ihre Federkraft gleich der Federkraft der Betätigungsfeder 46 ist, so hebt der Schließkörper 36 von dem Ventilsitz 38 ab und die hydraulische Last verschwindet. Aufgrund der oben beschriebenen Auslegungsbedingungen setzt gleichzeitig die Wirkung der Zuhaltefeder 32 ein und ersetzt durch ihre Federkraft die hydraulische Zuhaltekraft an dem Schließkörper 31 des Einlaß-Sitzventiles 24 und hält so das Einlaß-Sitzventil 24 sicher geschlossen. Der Übergang zu dem ersten Kennlinienast "a" setzt ein.

Bei rechtsdrehendem Moment wird entsprechend der rechte Teil 21 des Lenkventils 15 betätigt.

Zur Verminderung der Betätigungsmomente beim Parkieren soll das Betätigungsmoment ab einem bestimmten Druck im Servomotor nur noch unwesentlich erhöht werden. Dies bedeutet, daß die Kennlinie ab diesem bestimmten Punkt steiler verläuft. Man nennt diesen Effekt "Abschneidung" oder "Betätigungsmomentbegrenzung".

Diese "Abschneidung" erfolgt durch einen Begrenzungskolben 47, der dem Einlaß-Sitzventil 24 zugeordnet und der durch eine Begrenzungsfeder 48 beaufschlagt ist. Der Begrenzungskolben 47 weist einen geringfügig kleineren Durchmesser auf als der Schließkörper 31 des Einlaß-Sitzventiles 24. Der Begrenzungskolben 47 ist parallel zu dem Einlaß-Sitzventil 24 in einer Ebene angeordnet, die senkrecht zu der Längsachse des Lenkventils 15 steht. Dadurch ist die hydraulische Wirkung des Begrenzungskolbens 47 derjenigen des Schließkörpers 31 des Einlaß-Sitzventils 24 entgegengesetzt.

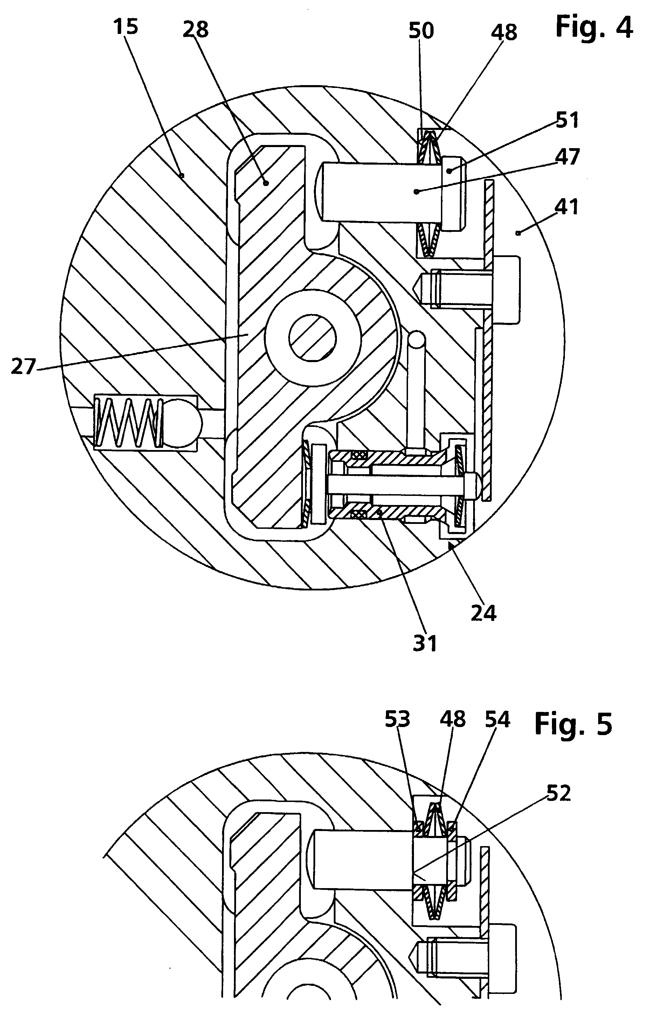

Die Begrenzungsfeder 48 stützt sich einerseits an einer Anschlagfläche 50 des Ventilkörpers 15 und andererseits an einem Bund 51 des Begrenzungskolbens 47 ab. Bezogen auf den Querschnitt des Begrenzungskolbens 47 ist die Begrenzungsfeder 48 so zu dimensionieren, daß der Begrenzungskolben 47 erst dann auf den Arm 28 des Betätigungshebels 27 wirkt, wenn der Abschneidedruck pₐ nach Fig. 13 in der Kammer 41 erreicht ist. Diese Ausführung ist in Fig. 4 dargestellt.

In einem Ausführungsbeispiel, das in Fig. 5 dargestellt ist, ist die Begrenzungsfeder 48 zwischen zwei Anschlägen mit Vorspannung gehalten. Der eine der Anschläge ist durch einen Absatz 52 des Begrenzungskolbens 47 und eine gegebenenfalls dazwischengeschaltete Einstellscheibe 53 und der andere Anschlag ist durch einen an dem Begrenzungskolben 47 befestigten Sprengring 54 gebildet. Bei dieser Ausführung kann man die Begrenzungsfeder 48 vor der Lenkungsmontage leicht einstellen.

Der Kennlinienverlauf dieser Ausführung mit dem Begrenzungskolben 47 ist in Fig. 12 durch die zusätzlichen Kennlinienäste g und h ergänzt.

Bei den bisher beschriebenen Ausführungsbeispielen wurde die Zuhaltefeder 32 nicht unmittelbar über den Betätigungshebel 27 betätigt, sondern indirekt unter Zwischenschaltung der Vorfeder 37. Dabei ist ein genauer Abgleich der Betätigungsfeder 46 erforderlich. Soll die Steifigkeit des Ventilsystems erhöht werden, so werden Konstruktionen vorgeschlagen, wie sie anhand der folgenden Ausführungsbeispiele beschrieben werden.

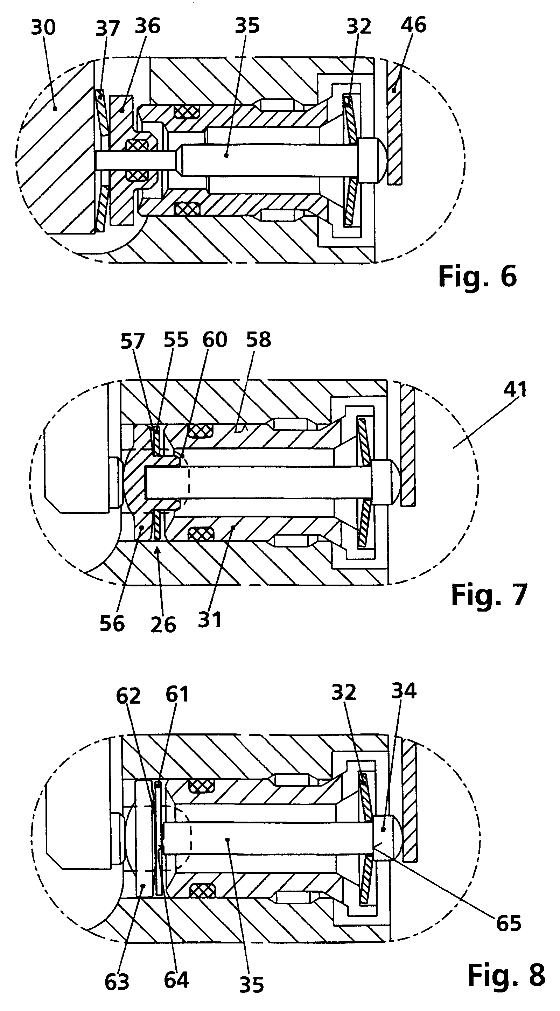

In dem Ausführungsbeispiel nach Fig. 6 wird der Betätigungsstift 35 dichtend durch den Schließkörper 36 des Auslaß-Sitzventils 26 hindurchgeführt. Dadurch kann sich die Betätigungsfeder 46 über den Betätigungsstift 35 unmittelbar an dem Betätigungshebel 27 bzw. an dessen Arm 30 abstützen. Die Betätigungsfeder 46 kann ihre Vorspannkraft über die Vorspannkraft des anderen Teils 21 des Lenkventils 15 ausgleichen. Entsprechend erfolgt die Betätigung der Zuhaltefeder 32 unter Umgehung der Vorfeder 37.

Gemäß dem Ausführungsbeispiel der Fig. 7 kann man auf eine Abdichtung zwischen dem Betätigungsstift und dem Schließkörper des Auslaß-Sitzventiles (Fig. 6) verzichten und die damit verbundene Reibung 40 vermeiden, wenn man eine Vorfeder 55 direkt als Schließkörper für das Auslaß-Sitzventil 26 verwendet. Um auch bei diesem Ausführungsbeispiel den Federweg der Vorfeder 55 zu begrenzen, verwendet man eine zusätzliche Anschlagscheibe 56. Die Vorfeder 55 kann als Tellerfeder ausgebildet sein. Vorteilhafterweise wird jedoch als Vorfeder 55 eine ebene Ringfeder verwendet, deren Federweg durch eine geeignete Formgebung, beispielsweise eine kegelstumpfförmige Abschrägung 57 der Anschlagscheibe 56, beliebig einstellbar ist. Die Anschlagscheibe 56 kann an ihrem Außendurchmesser unmittelbar in einer Bohrung 58 des Ventilkörpers 15 geführt werden, in der auch der Schließkörper 31 des Einlaß-Sitzventils 24 geführt ist. Um bei offenem Auslaß-Sitzventil 26 eine Verbindung von der Kammer 41 zum Rücklaufanschluß 45 zu gewährleisten, sind geeignete Schlitze 60 entweder in der Bohrung 58 oder in der Anschlagscheibe 56 vorgesehen. Zwischen der Innenumfangsfläche der Vorfeder 55 und einem Ansatz der Anschlagscheibe 56 besteht eine metallische Dichtung.

Diese metallische Dichtung kann entfallen, wenn man anstelle der ringförmigen Vorfeder 55 eine Vorfeder 61 in der Form einer vollflächigen Federscheibe verwendet, die an einer Wölbung 62 einer Anschlagscheibe 63 anliegt, wie dies in Fig. 8 dargestellt ist. Der Betätigungsstift 35 ist bei diesem Ausführungsbeispiel an seinem Ende, das dem Betätigungshebel 27 zugewandt ist, nicht geführt. Um trotzdem eine mittige Anlage des Betätigungsstiftes 35 an der Vorfeder 61 zu gewährleisten, muß die Kuppe 64 des Betätigungsstiftes 35 kugelig ausgebildet sein, mit dem Kugelmittelpunkt am Schnittpunkt der Achse des Schließkörpers 31 mit einer Anlagefläche 65 des Kopfes 34 des Betätigungsstiftes 35 an der Zuhaltefeder 32.

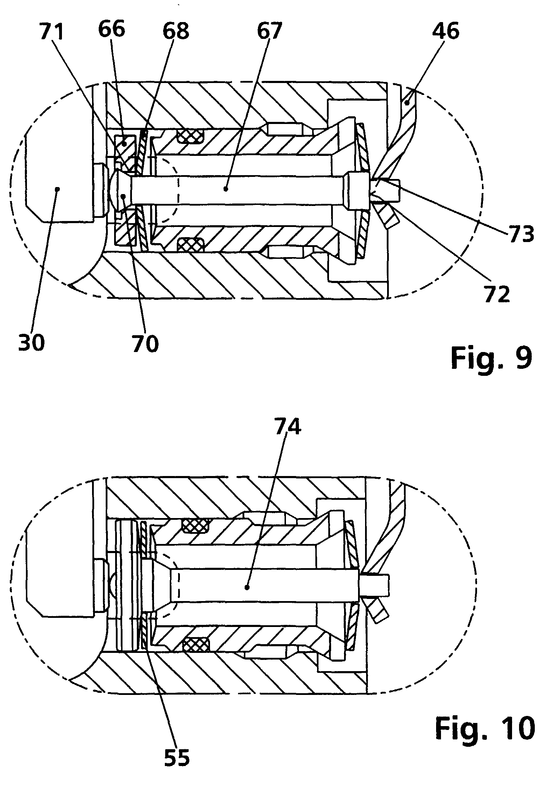

Eine weitere Variante der konstruktiven Ausbildung von Anschlagscheibe und Betätigungsstift ist in Fig. 9 dargestellt. Dabei ist eine Anschlagscheibe 66 pendelnd an einem Betätigungsstift 67 gelagert. Die Anschlagscheibe 66 ist dadurch im Anlenkbereich kräftefrei und kann sich auf die genaue Stellung der Vorfeder 68 leicht einstellen. In diesem Ausführungsbeispiel ist die Vorfeder 68 als Tellerfeder ausgebildet und wirkt gleichzeitig als Schließkörper des Auslaß-Sitzventiles 26.

Der Betätigungsstift 67 hat an seinem dem Betätigungshebel 27 zugewandten Ende eine kegelige oder kugelige Verdickung 70, die einerseits eine Bohrung 71 in der Anschlagscheibe 66 dichtend verschließt und andererseits die Kraft von dem Betätigungshebel 27 auf die Anschlagscheibe 66 formschlüssig überträgt. Zur Sicherstellung der Montagemöglichkeit wird hierbei auf eine Anschlagfläche 65, wie in dem Ausführungsbeispiel nach Fig. 8, verzichtet. Die Anlagefläche 65 wird durch einen in der Gegenrichtung wirkenden Anschlag 72 ersetzt, der mit der Betätigungsfeder 46 einen Formschluß bildet. Der Betätigungsstift 67 wird hierbei in einer Bohrung 73 der Betätigungsfeder 46 geführt.

Eine Variante zu der Ausführungsform der Fig. 9 ist in Fig. 10 dargestellt. Dabei ist die Anschlagscheibe 66 und der Betätigungsstift 67 zu einem einteiligen Betätigungsstift 74 zusammengefaßt. Die Vorfeder 55 ist, wie in Fig. 7, als ebene Ringfeder ausgebildet.

In Fig. 11 ist ein Längsschnitt durch ein weiteres Ausführungsbeispiel der Hilfskraftlenkung dargestellt. Dabei ist im Bereich des Teiles 21 des Lenkventils 15 ein Stück herausgebrochen, so daß das eigentliche Ventil sichtbar ist. Das Einlaß-Sitzventil 23 weist einen Schließkörper 75 auf. Der Schließkörper 75 wird durch eine Zuhaltefeder 76 in Schließrichtung gegen seinen Ventilsitz 77 gedrückt. Die Zuhaltefeder 76 ist als Blattfeder ausgebildet, deren eines Ende an dem Arm 28 des Betätigungshebels 27 befestigt ist. Das freie Ende der Zuhaltefeder 76 ist gabelförmig ausgebildet und greift in eine Ringnut 78 des Schließkörpers 75 ein. Eine Vorfeder 80 ist zwischen dem Schließkörper 75 und dem Arm 28 des Betätigungshebels 27 angeordnet und stellt gleichzeitig den Schließkörper des Auslaß-Sitzventiles 25 dar.

Wesentlich bei diesem Ausführungsbeispiel ist, daß ein Betätigungsstift und eine Betätigungsfeder, die bei den anderen Ausführungsbeispielen erforderlich sind, entfallen können. Der übrige Aufbau und die Funktion dieses Ausführungsbeispieles sind entsprechend wie bei den anderen Ausführungsbeispielen.

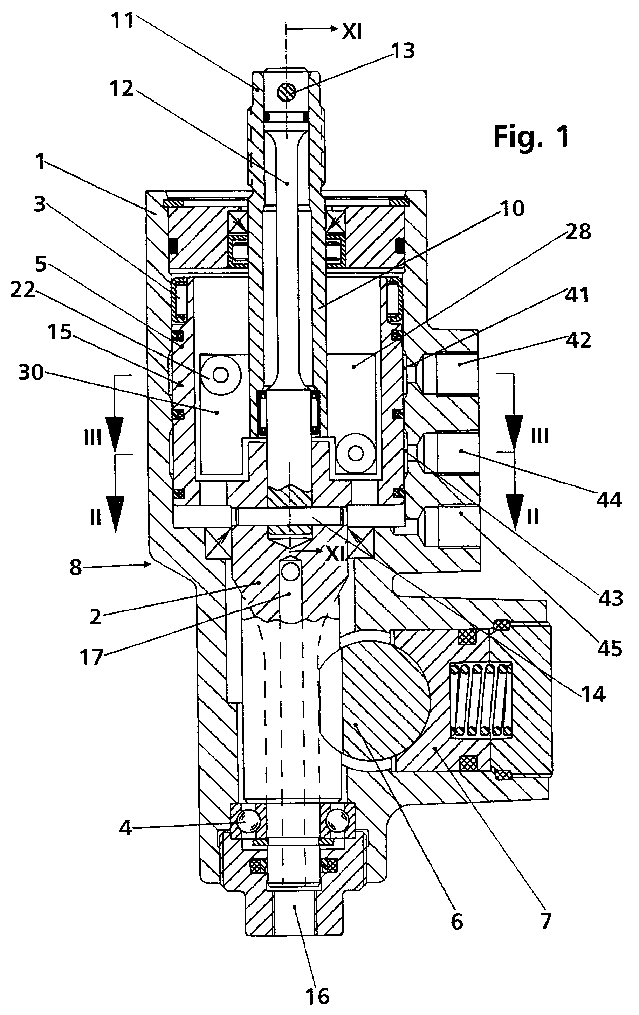

Die Funktion der Ausführungsbeispiele nach den Fig. 6 bis 10 entspricht derjenigen des Ausführungsbeispieles der Fig. 1 bis 5 und wird deshalb nicht näher beschrieben.

### Bezugszeichen

- 1: Lenkgehäuse
- 2: Ritzel
- 3: Lager
- 4: Lager
- 5: Ventilkörper
- 6: Zahnstange
- 7: Druckstück
- 8: Ausgangsglied
- 9: -
- 10: Eingangsglied
- 11: Lenkspindelanschluß
- 12: Drehstab
- 13: Stift
- 14: Stift
- 15: Lenkventil
- 16: Zulaufanschluß
- 17: Kanal
- 18: Zweigkanal
- 19: -
- 20: Zweigkanal
- 21: Teil des Lenkventils 15
- 22: Teil des Lenkventils 15
- 23: Einlaß-Sitzventil
- 24: Einlaß-Sitzventil
- 25: Auslaß-Sitzventil
- 26: Auslaß-Sitzventil
- 27: Betätigungshebel
- 28: Arm
- 29: -
- 30: Arm
- 31: Schließkörper
- 32: Zuhaltefeder
- 33: Ventilsitz
- 34: Kopf
- 35: Betätigungsstift
- 36: Schließkörper
- 37: Vorfeder
- 38: Ventilsitz
- 39: -
- 40: Zulaufkammer
- 41: Kammer
- 42: Zylinderanschluß
- 43: Kammer
- 44: Zylinderanschluß
- 45: Rücklaufanschluß
- 46: Betätigungsfeder
- 47: Begrenzungskolben
- 48: Begrenzungsfeder
- 49: -
- 50: Anschlagfläche
- 51: Bund
- 52: Absatz
- 53: Einstellscheibe
- 54: Sprengring
- 55: Vorfeder
- 56: Anschlagscheibe
- 57: Abschrägung
- 58: Bohrung
- 59: -
- 60: Schlitz
- 61: Vorfeder
- 62: Wölbung
- 63: Anschlagscheibe
- 64: Kuppe
- 65: Anlagefläche
- 66: Anschlagscheibe
- 67: Betätigungsstift
- 68: Vorfeder
- 69: -
- 70: Verdickung
- 71: Bohrung
- 72: Anschlag
- 73: Bohrung
- 74: Betätigungsstift
- 75: Schließkörper
- 76: Zuhaltefeder
- 77: Ventilsitz
- 78: Ringnut
- 79: -
- 80: Vorfeder

## Patentansprüche

1. Hilfskraftlenkung, insbesondere für Kraftfahrzeuge, mit folgenden Merkmalen:
- ein Lenkventil (15) weist zur Steuerung eines Druckmittels für einen Servomotor zwei Einlaß-Sitzventile (23, 24) und zwei Auslaß-Sitzventile (25, 26) mit je einem Schließkörper (31; 36) auf, wobei die Schließkörper (36) der Auslaß-Sitzventile (25, 26) über eine Betätigungseinrichtung in Abhängigkeit von einer Drehbewegung einer mit einem Eingangsglied (10) der Lenkung verbundenen Lenkspindel betätigbar sind;
- die Schließkörper (31) der Einlaß-Sitzventile (23, 24) sind in bezug auf einen Druck einer Druckquelle hydraulisch druckausgeglichen und halten durch die Kraft von Zuhaltefedern (32) die Einlaß-Sitzventile (23, 24) in der Neutralstellung des Lenkventils geschlossen;
- jede Zuhaltefeder (32) stützt sich einerseits an einem Schließkörper (31) eines der Einlaß-Sitzventile (23, 24) und andererseits an der Betätigungseinrichtung ab;
- die Auslaß-Sitzventile (25, 26) sind in der Neutralstellung des Lenkventils (15) geöffnet;
- jeweils ein Einlaß-Sitzventil (23 bzw. 24) und ein Auslaß-Sitzventil (25 bzw. 26) sind koaxial zueinander angeordnet;
- der wirksame Querschnitt der Schließkörper (36) der Auslaß-Sitzventile (25, 26) ist kleiner als der wirksame Querschnitt der Schließkörper (31) der Einlaß-Sitzventile (23, 24),
dadurch **gekennzeichnet,**
- daß das Lenkventil (15) zwischen dem Eingangsglied (10) und einem Ausgangsglied (8) der Lenkung angeordnet ist;
- daß die Betätigungseinrichtung wenigstens einen Betätigungshebel (27) zur Betätigung der Auslaß-Sitzventile (25, 26) aufweist und
- daß jede Zuhaltefeder (32) mit dem Betätigungshebel (27) in Wirkverbindung steht.

2. Hilfskraftlenkung nach Anspruch 1, dadurch **gekennzeichnet,** daß der Betätigungshebel (27) mit dem Eingangsglied (10) der Lenkung fest verbunden ist.

3. Hilfskraftlenkung nach Anspruch 2, dadurch **gekennzeichnet,** daß je ein Betätigungshebel (27) einem Auslaß-Sitzventil (25, 26) und einem dazugehörigen Einlaß-Sitzventil (23, 24) zugeordnet ist.

4. Hilfskraftlenkung nach Anspruch 2, dadurch **gekennzeichnet,** daß für beide Auslaß-Sitzventile (25, 26) ein gemeinsamer, insbesondere zweiarmiger Betätigungshebel (27) vorgesehen ist.

5. Hilfskraftlenkung nach Anspruch 1, dadurch **gekennzeichnet,** daß jeder Schließkörper (36) der Auslaß-Sitzventile mit einem Betätigungsstift (35, 67, 74) zusammenwirkt, an dem die Zuhaltefeder (32) angreift.

6. Hilfskraftlenkung nach Anspruch 5, dadurch **gekennzeichnet,** daß jeder Betätigungsstift (35, 67, 74) in Wirkverbindung mit dem Betätigungshebel (27) steht.

7. Hilfskraftlenkung nach Anspruch 6, dadurch **gekennzeichnet,** daß jeder Betätigungsstift (35) dichtend durch den jeweiligen Schließkörper (36) des Auslaß-Sitzventils (25, 26) hindurchgeführt ist.

8. Hilfskraftlenkung nach Anspruch 6, dadurch **gekennzeichnet,** daß jeder Schließkörper der Auslaß-Sitzventile (25, 26) mit einem Betätigungsstift (74) fest verbunden ist.

9. Hilfskraftlenkung nach einem der Ansprüche 1 bis 8, dadurch **gekennzeichnet,** daß zwischen dem Eingangsglied (10) und der Betätigungseinrichtung eine Vorfeder (37) angeordnet ist.

10. Hilfskraftlenkung nach einem der Ansprüche 1 bis 8, dadurch **gekennzeichnet,** daß eine Vorfeder (55, 61, 68) angeordnet ist, deren Federweg von einer Anschlagscheibe (56, 63, 66) begrenzt ist.

11. Hilfskraftlenkung nach einem der Ansprüche 1 bis 8, dadurch **gekennzeichnet,** daß je eine Vorfeder (37, 55, 61, 68) zwischen dem Betätigungshebel (27) und jedem Schließkörper (36) der Auslaß-Sitzventile (25, 26) angeordnet ist.

12. Hilfskraftlenkung nach Anspruch 11, dadurch **gekennzeichnet,** daß jede Vorfeder (55, 61, 68) einen Schließkörper eines Auslaß-Sitzventils (25, 26) bildet.

13. Hilfskraftlenkung nach Anspruch 12, dadurch **gekennzeichnet,** daß die Vorfeder (55) als ebene Ringfeder ausgebildet ist.

14. Hilfskraftlenkung nach Anspruch 12, dadurch **gekennzeichnet,** daß die Vorfeder (61) als vollflächige Federscheibe ausgebildet ist.

15. Hilfskraftlenkung nach einem der Ansprüche 10 bis 13, dadurch **gekennzeichnet,** daß die Anschlagscheibe (66) pendelnd an dem Betätigungsstift (67) gelagert ist.

16. Hilfskraftlenkung nach einem der Ansprüche 6 bis 8 und 15, dadurch **gekennzeichnet,** daß der Betätigungsstift (35, 67, 74) durch eine Betätigungsfeder (46) in Wirkverbindung mit dem Betätigungshebel (27) gehalten ist.

17. Hilfskraftlenkung nach einem der Ansprüche 1 bis 16, dadurch **gekennzeichnet,** daß jedem Einlaß-Sitzventil (23, 24) ein durch eine Begrenzungsfeder (48) beaufschlagter Begrenzungskolben (47) zugeordnet ist.

18. Hilfskraftlenkung nach Anspruch 17, dadurch **gekennzeichnet,** daß der Begrenzungskolben (47) einen geringfügig kleineren Durchmesser aufweist als der Schließkörper (31) des Einlaß-Sitzventils (23, 24).

19. Hilfskraftlenkung nach Anspruch 18, dadurch **gekennzeichnet,** daß je ein Begrenzungskolben (47) und ein Einlaß-Sitzventil (23, 24) parallel zueinander in einer Ebene angeordnet sind, die senkrecht zu der Längsachse des Lenkventils (15) steht.

20. Hilfskraftlenkung nach einem der Ansprüche 17 bis 19, dadurch **gekennzeichnet,** daß die Begrenzungsfeder (48) an dem Begrenzungskolben (47) zwischen zwei Anschlägen mit Vorspannung gehalten ist.

21. Hilfskraftlenkung nach Anspruch 20, dadurch **gekennzeichnet,** daß die Anschläge durch einen Absatz (52) des Begrenzungskolbens (47) und durch einen an dem Begrenzungskolben (47) befestigten Sprengring (54) gebildet sind.

22. Hilfskraftlenkung nach einem der Ansprüche 1 bis 21, dadurch **gekennzeichnet,** daß zwischen dem Eingangsglied (10) und dem Ausgangsglied (8) der Lenkung ein Drehstab (12) angeordnet ist.

## Claims

1. A power steering gear, in particular for vehicles having the following features:
- For controlling a pressurized medium for a servo motor, a steering valve (15) has two inlet seat valves (23, 24) and two outlet seat valves (25, 26) with their respective closure elements (31, 36), whereby the closure elements (36) of the outlet seat valves (25, 26) can be actuated via an actuating device in relation to the rotary movement of a steering shaft: connected to a steering input member (10);
- the closure elements (31) of the inlet seat valves (23, 24) are hydraulically balanced in relation to the pressure of a pressure source, and through the force of closure springs (32) keep the intake seat valves (23, 24) closed when the steering valve is in neutral position;
- each closure spring (32) is mounted on one end to a closure element (31) of one of the inlet seat valves (23, 24) and on the other end to the actuating device;
- in the neutral position of the steering valve (15), the outlet seat valves (25, 26) are open;
- one inlet seat valve (23 or 24) and one outlet seat valve (25 or 26) are arranged co-axially to one another.
- the effective cross-sections of the closure elements (36) of the outlet seat valves (25, 26) are smaller than those of the closure elements (31) of the inlet seat valves (23, 24); characterized in that
- the steering valve (15) is situated between the steering input member (19) and a steering output member (8);
- the actuating device has at least one actuating lever (27) to actuate the outlet seat valves (25, 26), and
- each closure ring (32) is actively connected to the actuating lever (27).

2. A power steering gear according to claim 1, characterized in that the actuating lever (27) is firmly connected to the steering input member (10).

3. A power steering gear according to claim 2, characterized in that each actuating lever (27) is assigned to a respective outlet seat valve (25, 26) and a respective inlet seat valve (23, 24).

4. A power steering gear according to claim 2, characterized in that a common, specifically two-arm actuating lever (27) is provided for both outlet seat valves (25, 26).

5. A power steering gear according to claim 1, characterized in that each closure element (36) of the outlet seat valves cooperates with an actuating pin (35, 67, 74) on which the closure spring is mounted (32).

6. A power steering gear according to claim 5, characterized in that each actuating pin (35, 67, 74) is actively connected to the actuating lever (27).

7. A power steering gear according to claim 6, characterized in that each actuating pin (35) sealingly extends through the respective closure element (36) of the outlet seat valve (25, 26).

8. A power steering gear according to claim 6, characterized in that each closure element of the outlet seat valves (25, 26) is firmly connected to an actuating pin (74).

9. A power steering gear according to one of the claims 1 to 8, characterized in that a preset spring (37) is disposed between the input member (10) and the actuating device.

10. A power steering gear according to one of the claims 1 to 8, characterized in that a preset spring (55, 61, 68) is disposed whose spring travel is limited by a stop washer (56, 63, 66).

11. A power steering gear according to one of the claims 1 to 8, characterized in that between the actuating lever (27) and each closure element (36) of the outlet seat valves (25, 26) there is one preset spring (37, 55, 61, 68).

12. A power steering gear according to claim 11, characterized in that each preset spring (55, 61, 68) forms a closure element of an outlet seat valve (25, 26).

13. A power steering gear according to claim 12, characterized in that the preset spring (55) is designed as a flat annular spring.

14. A power steering gear according to claim 12, characterized in that the preset spring (61) is designed as a full-area (holohedral) spring plate.

15. A power steering gear according to one of the claims 10 to 13, characterized in that the stop washer (66) is self-aligningly supported on the actuating pin (67).

16. A power steering gear according to one of the claims 6 to 8 and 15, characterized in that the actuating pin (35, 67, 74) is actively connected to the actuating lever (27) by means of an actuating spring (46).

17. A power steering gear according to one of the claims 1 to 16, characterized in that a limiting piston (47) actuated by a limiting spring (48) is assigned to each inlet seat valve (23, 24).

18. A power steering gear according to claim 17, characterized in that the limiting piston (47) has a slightly smaller diameter than the closure element (31) of the inlet seat valve (23, 24).

19. A power steering gear according to claim 18, characterized in that one limiting piston (47) and one inlet seat valve (23, 24) are arranged in parallel relation to each other in one plane vertical to the longitudinal axis of the steering valve (15).

20. A power steering gear according to one of the claims 17 to 19, characterized in that the limiting spring (48) is mounted to the limiting piston (47) between two steps with pre-load.

21. A power steering gear according to claim 20, characterized in that the stops are formed by a step (52) of the limiting piston (47) and by a snap ring (54) fixed to the limiting piston (47).

22. A power steering gear according to one of the claims 1 to 21, characterized in that a torsion bar (12) is disposed between the steering input member (10) and the steering output member (8).

## Revendications

1. Direction assistée, notamment pour véhicules automobiles, présentant les caractéristiques suivantes :
- une soupape de direction (15) comporte, pour la commande d'un fluide sous pression pour un servomoteur, deux soupapes à siège d'entrée (23, 24) et deux soupapes à siège de sortie (25, 26) présentant chacune un corps de fermeture (31; 36), le corps de fermeture (36) des soupapes à siège de sortie (25, 26) pouvant être actionnés au moyen d'un dispositif d'actionnement en fonction d'un mouvement de rotation d'un arbre de direction relié à un élément d'entrée (10) de la direction;
- le corps de fermeture (31) des soupapes à siège d'entrée (23, 24) sont sous pression hydraulique compensée par rapport à une pression d'une source de pression et maintiennent fermées les soupapes à siège d'entrée (23, 24) dans la position neutre de la soupape de direction au moyen de la force de ressorts de verrouillage (32);
- chaque ressort de verrouillage (32) s'appuie d'un côté sur un corps de fermeture (31) d'une des soupapes à siège entrée (23, 24), et de l'autre côté au dispositif d'actionnement ;
- les soupapes à siège de sortie (25, 26) sont ouvertes lors de la position neutre de la soupape de direction (15);
- une soupape à siège d'entrée (23, respectivement 24) et une soupape à siège de sortie (25, respectivement 26) sont toujours disposées dans le sens coaxial l'une par rapport à l'autre ;
- la section efficace du corps de fermeture (36) des soupapes à siège de sortie (25, 26) est inférieure à la section efficace du corps de fermeture (31) des soupapes à siège d'entrée (23, 24),
**caractérisée** en ce que :
- la soupape de direction (15) est disposée entre l'élément d'entrée (10) et un élément de sortie (8) de la direction ;
- le dispositif d'actionnement présente au moins un levier d'actionnement (27) pour l'actionnement des soupapes à siège de sortie (25, 26) et
- chaque ressort de verrouillage (32) se trouve en liaison active avec le lever d'actionnement (27).

2. Direction assistée selon la revendication 1, **caractérisée** en ce que le levier d'actionnement (27) est relié de façon fixe à l'élément d'entrée (10) de la direction.

3. Direction assistée selon la revendication 2, **caractérisée** en ce qu'un lever d'actionnement (27) est affecté à chaque soupape à siège de sortie (25, 26) et à la soupape à siège d'entrée (23, 24) correspondante.

4. Direction assistée selon la revendication 2, **caractérisée** en ce que, pour les deux soupapes à siège de sortie (25, 26), un levier d'actionnement (27) commun est prévu, en particulier un levier d'actionnement à deux bras.

5. Direction assistée selon la revendication 1, **caractérisée** en ce que chaque corps de fermeture (36) des soupapes à siège de sortie concourt avec une broche d'actionnement (35, 67, 74) sur laquelle agit le ressort de verrouillage (32).

6. Direction assistée selon la revendication 5, **caractérisé** en ce que chaque broche d'actionnement (35, 67, 74) est en liaison active avec le levier d'actionnement (27).

7. Direction assistée selon la revendication 6, **caractérisée** en ce que chaque broche d'actionnement (35) passe de façon étanche à travers le corps de fermeture (36) correspondant de la soupape à siège de sortie (25, 26).

8. Direction assistée selon la revendication 6, **caractérisée** en ce que chaque corps de fermeture des soupapes à siège de sortie (25, 26) est relié de façon fixe à une broche d'actionnement (74).

9. Direction assistée selon l'une des revendications 1 à 8, **caractérisée** en ce qu'un ressort préliminaire (37) est agencé entre l'élément d'entrée (10) et le dispositif d'actionnement.

10. Direction assistée selon l'une des revendications 1 à 8, **caractérisée** en ce qu'un ressort préliminaire (55, 61, 68) est monté, sa course étant délimitée par un disque de butée (56, 63, 66).

11. Direction assistée selon l'une des revendications 1 à 8, **caractérisée** en ce qu'un ressort préliminaire (37, 55, 61, 68) est agencé entre le lever d'actionnement (27) et chaque corps de fermeture (36) des soupapes à siège de sortie (25, 26).

12. Direction assistée selon la revendication 11, **caractérisée** en ce que chaque ressort préliminaire (55, 61, 68) forme un corps de fermeture d'une soupape à siège de sortie (25, 26).

13. Direction assistée selon la revendication 12, **caractérisée** en ce que le ressort préliminaire (55) est conçu comme un ressort annulaire plat.

14. Direction assistée selon la revendication 12, **caractérisée** en ce que le ressort préliminaire (61) est conçu comme une rondelle élastique pleine.

15. Direction assistée selon l'une des revendications 10 à 13, **caractérisée** en ce que le disque de butée (66) est monté en palier oscillant sur la broche d'actionnement (67).

16. Direction assistée selon l'une des revendications 6 à 8 et 15, **caractérisée** en ce que la broche d'actionnement (35, 67, 74) est maintenue par un ressort d'actionnement (46) en liaison active avec le levier d'actionnement (27).

17. Direction assistée selon l'une des revendications 1 à 16, **caractérisée** en ce qu'à chaque soupape à siège d'entrée (23, 24) est affecté un piston de limitation (47) pouvant être sollicité par un ressort de limitation (48).

18. Direction assistée selon la revendication 17, **caractérisée** en ce que le piston de limitation (47) présente un diamètre légèrement inférieur à celui ou corps de fermeture (31) de la soupape à siège d'entrée (23, 24).

19. Direction assistée selon la revendication 18, **caractérisée** en ce que chaque fois un piston de limitation (47) et une soupape à siège d'entrée (23, 24) sont disposés en parallèles, dans un plan, et sont perpendiculaires à l'axe longitudinal de la soupape de direction (15).

20. Direction assistée selon l'une des revendications 17 à 19, **caracterisée** en ce que le ressort de limitation (48) est maintenu avec précontrainte entre deux butées sur le piston de limitation (47).

21. Direction assistée selon la revendication 20, **caractérisée** en ce que les butées sont formées par un épaulement (52) du piston de limitation (47) et par une bague de retenue (54) fixée au piston de limitation (47).

22. Direction assistée selon l'une des revendications 1 à 21, **caractérisée** en ce qu'une barre de torsion (12) est disposée entre l'élément d'entrée (10), et l'élément de sortie (8) de la direction.
